# EUROPÄISCHE PATENTSCHRIFT

(11) **EP 0 504 618 B1**
(45) Veröffentlichungstag und Bekanntmachung des Hinweises auf die Patenterteilung: **22.03.1995**
(21) Anmeldenummer: 92103004.5
(22) Anmeldetag: 22.02.1992
(51) Int. Cl.: B60N 2/28

(54) **Kindersicherheitssitz**
Child's safety seat
Siège de sécurité pour enfant

(30) Priorität: 16.03.1991 DE 4108660
(43) Veröffentlichungstag der Anmeldung: 23.09.1992
(73) Patentinhaber: Concord Kinderautositze- und Kindermöbel sowie Geräteherstellungsgesellschaft mbH, D-95346 Stadtsteinach (DE)
(72) Erfinder: Reithmeier, Harald Martin, W-8652 Stadtsteinach (DE)
(74) Vertreter: LOUIS, PÖHLAU, LOHRENTZ & SEGETH

(56) Entgegenhaltungen:
- WO-A-86/01778
- WO-A-90/03746
- AU-B- 582 458
- DE-A- 3 514 208
- DE-U- 8 808 637

## Beschreibung

Die Erfindung betrifft einen Kindersicherheitssitz mit einer Sitzschale, die mit einer Schienenführung auf einem Unterteil zwischen mindestens einer Sitzposition und mindestens einer Liegeposition verstellbar und mit einer zwischen einer Fixierstellung und einer Freigabestellung verstellbaren Rasteinrichtung in der mindestens einen Sitz- bzw. Liegeposition festlegbar ist, und die eine Rückenlehne aufweist, die mit einem Befestigungselement für einen an der Rückseite des Kindersicherheitssitzes verlaufenden Schultergurt eines in einem Kraftfahrzeug vorhandenen Dreipunktgurtes versehen ist, dessen Beckengurt zum Festhalten des Unterteils des Kindersicherheitssitzes vorgesehen ist.

Ein derartiger Kindersicherheitssitz ist aus dem DE-GM 88 08 637 bekannt. Bei diesem bekannten Kindersicherheitssitz dient das an der Rückenlehne vorgesehene Befestigungselement zur Halterung des Schultergurtes des im Kraftfahrzeug vorhandenen Dreipunktgurtes, eine Fixierung des Kindersicherheitssitzes bzw. seiner Rückenlehne mittels des Befestigungselementes ist dort jedoch nur bedingt bzw. insbes. bei plötzlich auftretenden Beschleunigungs- bzw. Verzögerungskräften gewährleistet. In der normalen Ruheposition kann dieser bekannte Kindersicherheitssitz also in bezug auf den Sitz des Kraftfahrzeugs, auf welchem der Kindersicherheitssitz angeordnet ist, bewegt werden. Das wird oftmals als störend empfunden.

Die DE 35 14 208 C2 beschreibt einen Kindersicherheitssitz mit einem Unterteil und einer Sitzschale, die in bezug auf das Unterteil durch eine mit einer Rasteinrichtung versehene bogenförmige Schienenführung zwischen einer Sitzposition und einer Liegeposition verstellbar ist. Die bogenförmige Schienenführung weist ein erstes bogenförmiges Schienenelement und ein das erste Schienenelement führendes zweites bogenförmiges Schienenelement auf. Das erste Schienenelement ist mit mindestens zwei Ausnehmungen mit einem zentralen Ansatz ausgebildet, auf dem ein Rollenelement gelagert ist, das zwischen dem ersten und dem zweiten Schienenelement einen definierten Abstand festlegt.

Der Erfindung liegt die Aufgabe zugrunde, einen Kindersicherheitssitz der eingangs genannten Art so weiterzubilden, dass sich auch in der normalen Ruheposition des Kindersicherheitssitzes durch den Schultergurt des im Kraftfahrzeug vorhandenen Dreipunktgurtes in Verbindung mit dem an der Rückenlehne des Kindersicherheitssitzes vorgesehenen Befestigungselement eine Fixierung des Kindersicherheitssitzes ergibt, ohne dass hierdurch die Verstellbarkeit der Sitzschale zwischen den diversen möglichen Positionen beeinträchtigt wird.

Diese Aufgabe wird erfindungsgemäss dadurch gelöst, dass am Befestigungselement eine Klemmeinrichtung für den Schultergurt vorgesehen ist, die zwischen einer Freigabestellung und einer Fixierstellung verstellbar ist, und dass die Klemmeinrichtung mit der Rasteinrichtung derart verbunden ist, dass sich die Klemmeinrichtung jeweils in der gleichen Stellung befindet wie die Rasteinrichtung. Wird bei diesem Kindersicherheitssitz also die Rasteinrichtung von der Fixierstellung in die Freigabestellung verstellt, so wird gleichzeitig auch die Klemmeinrichtung von ihrer Fixierstellung in ihre Freigabestellung verstellt, so dass es möglich ist, die Sitzschale in bezug auf das Unterteil des Kindersicherheitssitzes wunschgemäss zu verstellen. Das ist deshalb problemlos möglich, weil gleichzeitig der Schultergurt des Dreipunktgurtes durch das an der Rückenlehne der Sitzschale vorgesehene Befestigungselement wohl geführt aber nicht fixiert ist. Ist dann eine gewünschte Sitz- bzw. Liegeposition der Sitzschale in bezug auf das Unterteil des Kindersicherheitssitzes erreicht, so kann die Rasteinrichtung losgelassen werden, wodurch die Rasteinrichtung sich selbständig wieder von der Freigabestellung in die Fixierstellung verstellt, gleichzeitig wird durch die Wirkverbindung zwischen der Rasteinrichtung und der Klemmeinrichtung der Schultergurt des im Kraftfahrzeug vorhandenen Dreipunktgurtes mit Hilfe der Klemmeinrichtung wieder am Befestigungselement bzw. an der Rückenlehne der Sitzschale des Kindersicherheitssitzes fixiert. Beim erfindungsgemässen Kindersicherheitssitz ergibt sich somit der Vorteil, dass in jeder definierten Sitz- bzw. Liegeposition die Sitzschale bzw. die Rückenlehne der Sitzschale durch den Schultergurt, d.h. durch die Fixierung des Schultergurtes an der Klemmeinrichtung des Befestigungselementes am Fahrzeugsitz definiert festgelegt ist. Unerwünschte Bewegungen des Kindersicherheitssitzes werden also verhindert. Das wird insbes. dann erzielt, wenn der Automatikgurt des Kraftfahrzeugs zur Erzielung einer Arretierung bzw. zur Erzielung einer Sperre, kurz gestrafft wird, bevor dann mit Hilfe der Rasteinrichtung auch die Klemmeinrichtung betätigt, d.h. in ihre Fixierstellung gebracht wird.

Bei einem derartigen Kindersicherheitssitz ist es zweckmässig, wenn die Rasteinrichtung an dem zur Sitzschale zugehörigen Element der Schienenführung vorgesehen ist, und wenn die Verbindung zwischen der Klemmeinrichtung und der Rasteinrichtung mittels einer an der Sitzschale festgelegten Verbindungseinrichtung gegeben ist. Dadurch ergibt sich der Vorteil, dass die Verbindungseinrichtung jede Bewegung der Sitzschale mitmacht und folglich eine konstante Länge besitzen kann.

Eine einfache Ausbildung des erfindungsgemässen Kindersicherheitssitzes ergibt sich, wenn die Verbindungseinrichtung zwischen der Rast- und der Klemmeinrichtung als Bowdenzug ausgebildet ist. Selbstverständlich wäre es auch möglich, die Verbindungseinrichtung als elektrische Leitung vorzusehen und die Klemmeinrichtung als elektromechanische Einrichtung auszubilden.

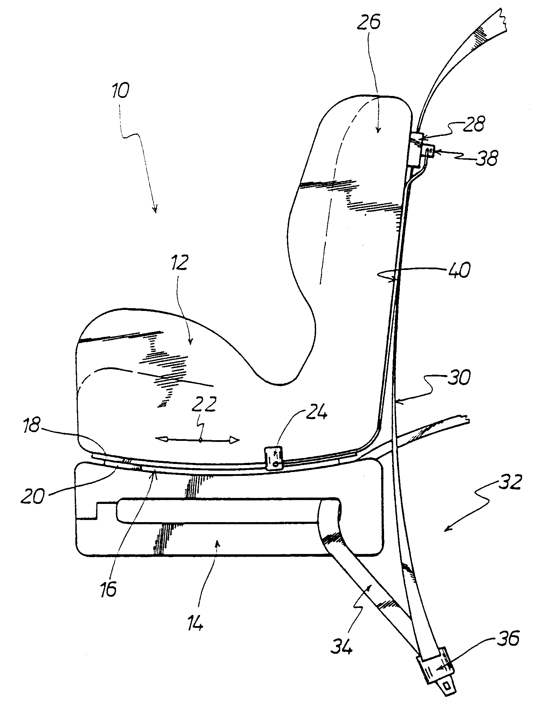

Weitere Einzelheiten, Merkmale und Vorteile ergeben sich aus der nachfolgenden Beschreibung eines in der Zeichnung schematisch in einer Seitenansicht angedeuteten Ausführungsbeispieles des erfindungsgemässen Kindersicherheitssitzes.

Die Figur zeigt einen Kindersicherheitssitz 10 mit einer Sitzschale 12, die auf einem Unterteil 14 des Kindersicherheitssitzes 10 angeordnet ist. Zwischen der Sitzschale 12 und dem Unterteil 14 befindet sich eine bogenförmige Schienenführung 16 mit einem ersten, zur Sitzschale 12 zugehörigen Schienenelement 18 und einem zweiten, zum Unterteil 14 zugehörigen Schienenelement 20. Mit Hilfe der Schienenführung 16 ist es möglich, die Sitzschale 12 in bezug auf das Unterteil 14 zwischen mindestens einer Sitzposition und mindestens einer Liegeposition zu verstellen, was durch den Doppelpfeil 22 angedeutet ist. An der Schienenführung 16 bzw. an der Sitzschale 12 ist eine Rasteinrichtung 24 vorgesehen, die zwischen einer Fixierstellung und einer Freigabestellung verstellbar ist. In der normalen Ruheposition des Kindersicherheitssitzes 10 nimmt die Rasteinrichtung 24 die Fixierstellung ein, so dass eine Verstellung der Sitzschale 12 in bezug auf das Unterteil 14 nicht möglich ist. Soll die Sitzschale 12 verstellt werden, so wird die Rasteinrichtung 24 von ihrer normalen Fixierstellung in die Freigabestellung verstellt, wonach es möglich ist, die Sitzschale 12 in bezug auf das Unterteil 14 wunschgemäss zu verstellen.

Mit der Bezugsziffer 26 ist die Rückenlehne der Sitzschale 12 bezeichnet. Die Rückenlehne 26 ist mit einem Befestigungselement 28 ausgebildet, das zur Aufnahme und Halterung eines Schultergurtes 30 eines in einem Kraftfahrzeug vorhandenen Dreipunktgurtes 32 dient. Diverse Ausbildungen des Befestigungselementes 28 bzw. eines Kindersicherheitssitzes 10 mit einem Befestigungselement 28 an der Rückenlehne 26 der Sitzschale 12 sind im eingangs erwähnten DE-GM 88 08 637 offenbart, so dass es sich erübrigt, hier noch einmal detailliert darauf einzugehen.

Der Dreipunktgurt 32 weist ausserdem einen Beckengurt 34 auf, der zum Festhalten des Unterteiles 14 des Kindersicherheitssitzes 10 dient. Der Schulter- und der Beckengurt 30, 34 des Dreipunktgurtes 32 sind in der Zeichnung nur abschnittweise angedeutet. Mit der Bezugsziffer 36 ist ein Gurtschlossteil des Dreipunktgurtes 32 bezeichnet.

Am Befestigungselement 28 ist eine Klemmeinrichtung 38 vorgesehen, die zum Festklemmen des Schultergurtes 30 dient, wenn sich die Rasteinrichtung 24 in ihrer Fixierstellung befindet. Wird die Rasteinrichtung 24 von ihrer Fixierstellung in ihre Freigabestellung verstellt, so wird gleichzeitig auch die Klemmeinrichtung von ihrer den Schultergurt 30 an der Rückenlehne 26 bzw. dem Befestigungselement 28 fixierenden Stellung in eine Freigabestellung verstellt, so dass es problemlos möglich ist, die Sitzschale 12 wunschgemäss relativ zum Unterteil 14 zu verstellen, ohne dass diese Verstellung durch den Schultergurt 30 behindert würde.

Um die Klemmeinrichtung 38 simultan mit der Rasteinrichtung 24 zwischen der Fixier- und der Freigabestellung verstellen zu können, ist zwischen der Klemmeinrichtung 38 und der Rasteinrichtung 24 eine Verbindungseinrichtung 40 vorgesehen, die bspw. als Bowdenzug ausgebildet ist, der an der Sitzschale 12 festgelegt ist. Entsprechend ist die Rasteinrichtung 24 an dem zur Sitzschale 12 zugehörigen ersten Schienenelement 18 der zwischen dem Unterteil 14 und der Sitzschale 12 befindlichen Schienenführung 16 vorgesehen.

## Patentansprüche

1. Kindersicherheitssitz mit einer Sitzschale (12), die mit einer Schienenführung (16) auf einem Unterteil (14) zwischen mindestens einer Sitzposition und mindestens einer Liegeposition verstellbar und mit einer zwischen einer Fixierstellung und einer Freigabestellung verstellbaren Rasteinrichtung (24) in der mindestens einen Sitz- bzw. Liegeposition festlegbar ist, und die eine Rückenlehne (26) aufweist, die mit einem Befestigungselement (28) für einen an der Rückseite des Kindersicherheitssitzes (10) verlaufenden Schultergurt (30) eines in einem Kraftfahrzeug vorhandenen Dreipunktgurtes (32) versehen ist, dessen Beckengurt (34) zum Festhalten des Unterteils (14) des Kindersicherheitssitzes (10) vorgesehen ist,
**dadurch gekennzeichnet**,
dass am Befestigungselement (28) eine Klemmeinrichtung (38) für den Schultergurt (30) vorgesehen ist, die zwischen einer Freigabestellung und einer Fixierstellung verstellbar ist, und dass die Klemmeinrichtung (38) mit der Rasteinrichtung (24) derart verbunden ist, dass sich die Klemmeinrichtung (38) jeweils in der gleichen Stellung befindet wie die Rasteinrichtung (24).

2. Kindersicherheitssitz nach Anspruch 1,
**dadurch gekennzeichnet**,
dass die Rasteinrichtung (24) an dem zur Sitzschale (12) zugehörigen Schienenelement (18) der Schienenführung (16) vorgesehen ist, und dass die Verbindung zwischen der Klemmeinrichtung (38) und der Rasteinrichtung (24) mittels einer an der Sitzschale (12) festgelegten Verbindungseinrichtung (40) gegeben ist.

3. Kindersicherheitssitz nach Anspruch 2,
**dadurch gekennzeichnet**,
dass die Verbindungseinrichtung (40) als Bowdenzug ausgebildet ist.

## Claims

1. A child's safety seat with a seat shell (12) which is adjustable with a rail guide (16) on a base (14) between at least one seating position and at least one recumbent position, and with an engagement device (24) that is adjustable between a fixing position and a releasing position; wherein at least one seating or recumbent position can be set; and which has a back rest (26) which is provided with a securing element (28) for a shoulder strap (30), extending at the rear of the child's safety seat (10), of a three-point belt (32) provided in a motor vehicle whose pelvic belt (34) is intended to secure the base (14) of the child's safety seat (10);
**characterized in that**
on the securing element (28) provision is made for a clamping device (38) for the shoulder strap (30), which is adjustable between a releasing position and a fixing position; and that the clamping device (38) is connected to the engagement device (24) in such a way that the clamping device (38) is on each occasion in the same position as the engagement device (24).

2. A child's safety seat according to claim 1,
**characterized in that**
the engagement device (24) is provided on the rail element (18) of the rail guide (16) belonging to the seat shell (12); and that the connection between the clamping device (38) and the engagement device (24) is provided by a connecting device (40) fixed on the seat shell (12).

3. A child's safety seat according to claim 2,
**characterized in that**
the connecting device (40) is designed as a Bowden cable.

## Revendications

1. Siège de sécurité pour enfants avec une coque d'assise (12) doté d'un dispositif à glissière (16) sur une partie inférieure (14), réglable entre au moins une position assise et au moins une position couchée et munie d'un dispositif à crans (24) réglable dans une position de fixation et une position de déblocage correspondant auxdites positions assises ou couchées, et qui présente un dossier (26), muni d'un organe de fixation (28) de la partie située au niveau des épaules d'une ceinture (30) passant le long du dos du siège de sécurité (10), laquelle partie de ceinture (30) appartenant à une ceinture à trois attaches (32) telle que l'on en trouve dans les véhicules automobiles, dont la partie située au niveau du bassin (34) est destinée à la fixation de la partie inférieure (14) du siège de sécurité (10), caractérisé en ce que l'organe de fixation (28) comporte un dispositif (38) pour attacher la partie située au niveau des épaules de la ceinture (30), qui est réglable entre une position de déblocage et une position de fixation, ledit dispositif d'attache (38) étant relié au dispositif à crans de manière à ce que le dispositif d'attache (38) soit, dans tous les cas, dans le même réglage que ledit dispositif à crans (24).

2. Siège de sécurité pour enfants selon la revendication 1, caractérisé en ce que le dispositif à crans (24) équipe l'élément de glissière (18) rapporté à l'assise du siège (12), et en ce que la relation entre le dispositif d'attache (38) et le dispositif à crans (24) s'effectue au moyen d'un dispositif de liaison (40) rapporté à ladite assise (12).

3. Siège de sécurité pour enfants selon la revendication 2, caractérisé en ce que le dispositif de liaison (40) est un câble à gaine.
